# EUROPEAN PATENT APPLICATION

(11) **EP 0 884 629 A1**
(43) Date of publication of application: **16.12.1998**
(21) Application number: 97117587.2
(22) Date of filing: 10.10.1997
(51) Int. Cl.: G03B 1/00, G03B 17/24

(54) **Camera equipped with character display device**

(30) Priority: 11.06.1997 US 872994; 09.10.1997 US 947932
(71) Applicant: Hattori, Sachiko, Ito-shi, Shizuoka Prefecture (JP); Uehara, Masahiro, Yokohama-shi, Kanagawa Prefecture (JP)
(72) Inventor: Matsumoto,Fumiharu, Nakano-ku, Tokyo 164 (JP)
(74) Representative: von Fischern, Bernhard, Dipl.-Ing.

(57) **Abstract**

The present invention provides a camera having character display capability for producing photographs having a large subject area and a smaller distinct border area for characters, words or symbols. The camera incorporates an exposure chamber divided into two light-tight sections by a light shield which may be integrally molded. One of the sections contains an artificial light generating source to expose characters placed on a transparent film onto the character area of the film frame. The other exposure chamber section is open to the camera lens and exposes the subject of the photograph onto a subject area of the film frame. The artificial light generating source may comprise an electronic strobe flash and may share its power source and circuitry with the external camera flash used to illuminate the subject of the picture. When employed in a disposable camera, the invention facilitates the use of recyclable parts and is generally simple and economical to manufacture.

## Description

The present invention relates to a camera equipped with character display device, and relates to a camera which shields a part of the subject image which enters from the camera lens and is photographed onto the film surface, and exposes specific characters or images onto this shielded portion.

### Background of the Invention

The concept of a camera that allows pictures to be provided for advertisement or memorial purposes by shielding a part of the subject image that enters from the camera lens and is photographed onto the film surface, and exposing specific characters or images (such as a service mark of specific manufacturers, referred to hereafter as "character") onto the shielded portion, has already been submitted by this applicant as Japanese Utility Model Application No. H5-1462 (Utility Model Publication No. H6-69948. The present invention is intended to improve upon that concept.

Japanese Utility Model Publication No. Hei. 6-69948 discloses a camera that enables photographic prints of characters, messages or images for advertisements or promotional purposes developed and printed within a predetermined region of a single frame of a picture taken by a camera. Characters are displayed separately from the subject of the photograph by exposing two separate regions of a single frame of a photographic film to light from two different sources. Light from the first source enters through the camera lens and light from the second source is captured from the flash lamp provided externally on the camera for illuminating the subject. An optical fiber conducts light from the external flash lamp into the camera interior and onto the frame of the photographic film. One end of the optical fiber faces the external flash light source and the other end of the optical fiber is connected to a light diffusing block that distributes the transmitted light over a transparent film bearing characters, messages or images that are simultaneously exposed on a portion of the photographic film with the picture coming through the camera lens.

However, the optical fiber employed in the camera disclosed in the foregoing Japanese Utility Model Publication No. Hei. 6-69948 can permit unwanted, stray light to enter the exposure chamber, exposing the film to light even when the camera shutter is in a closed position. This unwanted exposure can occur because the end of the optical fiber facing the external flash lamp is always exposed to the ambient light entering through the transparent window of the flash unit. The external light is conducted through the optical fiber, into the exposure chamber and onto the photographic film.

To prevent unwanted light from entering the exposure chamber through the optical fiber, a shutter mechanism at some point along the optical fiber and synchronously operated with the camera shutter release mechanism could be used so that light from the strobe lamp end of the fiber is transmitted only when the camera shutter is released. However, adding components such as a shutter and synchronization hardware increases complexity and cost of the camera, which is undesirable, especially when the character display is employed in an inexpensive disposable camera. Additionally, light emitted from the end of a narrow optical fiber cannot expose a rectangular block area corresponding to the character area of the frame without the use of a light diffusion block placed at the end of the optical fiber to distribute the light. However, the diffusion block adds further complexity and cost of the camera.

It would be desirable to provide a camera capable of effectively exposing a section of the film frame with a character display while minimizing complexity and cost to make service as a disposable camera practical. It is an objective of the present invention to provide such a camera.

In addition, there has been a request that the character image have a long rectangular shape, which includes an edge of the exposure window, so that records relating to the photograph can be written into the margin of the printed image characters. For cases of such long rectangular character image, the length of the diffusion block also becomes large, so that, while it is technically possible to diffuse the light from the optical conductor along the length of the long diffusion block, it is a source of increased cost.

It is an objective of the present invention to resolve the above problems, and to allow the cost to be greatly reduced, by using a strobe flash tube directly instead of using an optical conductor, such as optical fiber.

### Summary of the Invention

It is an object of the present invention to provide a camera capable of producing a frame of photographic film having two distinct areas.

It is an object of the present invention to provide a camera capable of exposing characters on a frame of photographic film in an area that is separate from the area of the subject image.

It is a further object of the invention to provide a camera having an artificial light generating source within the exposure chamber of the camera.

It is yet another object of the invention to provide a camera having an exposure chamber that is divided into at least two light-tight sections.

It is another object of the invention to provide a camera that can be integrally molded, including the camera body and interior structure.

It is another object of the invention to provide a character display device that economical and practical to use in disposable cameras.

It is yet another object of the invention to provide a camera having an exterior light generating source and an interior light generating source that can be configured to share at least part of their electrical circuit and power source.

It is yet another object of the invention to provide a camera having an artificial light generating source within the exposure chamber having an intensity level that is variable by using electrical resistors or by shading of the light and which variability may be controlled by the user.

The present invention provides a camera having character display capability that employs an artificial light generating source, such as an electronic strobe flash, within the exposure chamber of the camera to expose a portion of the photographic film frame with characters selected by the user. The flash used to illuminate and expose the characters onto the film operates in a separate section of the exposure chamber to prevent exposing the entire frame of the photographic film and destroying the image intended to be photographed. The character flash exposes only a portion of the frame for character display leaving the remainder of the frame to be exposed by light entering from the camera lens.

The light from the character flash is segregated from the subject area of the frame by dividing the exposure chamber into two sections with a light shield that seals out any light transfer between the sections. A first section of the exposure chamber, the subject section, is open at one end to the camera lens and at the other to the film frame. A second section of the exposure chamber, the character section, does not open to the camera lens, but instead contains the character flash and is open to the photographic film frame.

The film frame exposed by this exposure chamber has two distinct areas corresponding to the character and subject exposure chamber sections. The subject area of the film frame contains the subject of the photograph, such as would appear in a photograph taken with a conventional camera. The character area, appearing adjacent to the subject area, displays the characters selected by the user. The characters or images desired by the user are marked on a strip of transparent film that is then installed inside the back of the camera between the character flash and the photographic film. The character flash illuminates the characters on the transparent film with each photograph so that every frame on the roll of film can have the same arrangement of characters displayed in the character area.

In cameras equipped with an external flash to illuminate the subject of the photograph, the character flash may be configured to share a port on of its electric circuitry and power source with the external flash to reduce the number of components needed and to reduce cost. To reduce cost further by reducing components, the character flash bulb may be of the same type as that used for the external subject flash. However, as less light intensity is required to illuminate the small area of the character exposure chamber section than is required to illuminate a subject outside the camera, the output of the character flash can be reduced either with resistors or with shading placed between the flash and the photographic film or both. Additionally, the internal character flash intensity may be made adjustable by the user to make the exposure level of the character portion of the film frame correspond to the exposure intensity of the subject portion of the film frame as varies depending on the amount of light available to illuminate the subject. The user adjustability of the character flash may also be used to adjust the exposure of the character film portion of the film frame when an automatic exposure mechanism is used to control the amount of subject exposure onto the film.

To make production of the present camera simple and cost-effective, which are priorities for a disposable camera, many of the components are recyclable. The camera body, including the structure of the exposure chamber and light shield may be integrally molded from plastic and reused to make new disposable cameras after being returned by the user with exposed film for developing. Additionally, electronic components such as the flash bulbs and their circuitry may also be recycled for reuse in newly refurbished disposable cameras.

In accordance with the invention, the camera may be equipped with a character display device composed in the following manner. A light shield is placed within the camera obscura located between the camera lens and the photographic film in the camera body, dividing the obscura into two sections. The first camera obscura section contains the camera lens, while the second camera obscura section does not. The light shield divides the exposure window into first and second exposure windows. During photographing of a subject, the first exposure window exposes the subject transmitted through the camera lens onto the photographic film surface, while the second exposure window fixes the transparent film displaying the character in proximity to the film surface, and this exposes the character onto the photographic film by a character illumination light source placed within the second camera obscura. This is an important characteristic of the camera according to the present invention.

The light emission circuitry of the strobe flash light source for character exposure illumination shares a circuit portion in common with the light emission circuitry of the strobe flash light source which illuminates the subject. The strobe flash tube of the strobe flash light source for character exposure illumination is connected in parallel with the strobe flash tube of the strobe flash light source which illuminates the subject. Moreover, the strobe flash tube of the strobe flash light source for character exposure illumination has a resistor connected serially, and then connected in parallel with the strobe flash tube of the strobe flash light source which illuminates the subject. The resistor inserted serially is composed of multiple resistors which are switchable.

### Brief Description of the Drawings

The foregoing and other objects and advantages of the invention will be appreciated more fully from the following further description thereof, with reference to the accompanying drawings wherein:
Figure 1A is a front view of the camera of the present invention;
Figure 1B is a side view of the camera of the present invention;
Figure 2 is a rear view of the camera of the present invention with the back lid of the camera removed;
Figure 3 is a rear view of the camera of Figure 2 with the character film and character film holder removed;
Figure 4 is a side, sectional view, taken along line 4-4 of the camera of Figure 1;
Figure 5 is a detailed view of the camera exposure chamber;
Figure 5A is a perspective view of the character film holder;
Figure 5B is a perspective view of the light shade;
Figure 5C is a top view of the camera with back lid removed;
Figure 6 is a diagram of a strobe flash emission circuit of the present invention;
Figure 7 is an example of a photographed print image in accordance with the present invention;
Figure 8 is a diagram of the strobe flash emission circuit in accordance with another embodiment of the invention; and
Figure 9 is a plan view of the camera containing the strobe flash emission circuit of Figure 8.

### Detailed Description of the Preferred Embodiments

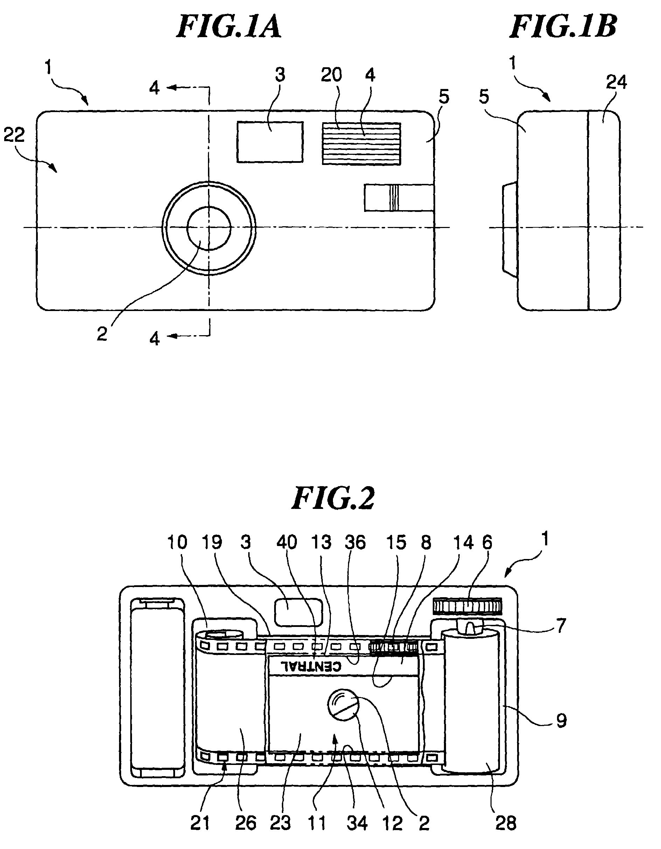

Figs. 1A and 1B show a camera that is typical of the kind in which the present invention can be used. Though some aspects of the invention are particularly well suited to disposable cameras that are marketed with preloaded film and are intended to be used only with that film, non-disposable cameras can also use the benefits offered by the invention.

As seen in Figs. 1A, and 1B, the camera 1 is comprised of a body 22, back lid 24, camera lens 2, finder lens 3, transparent cover 20 for a subject strobe flash 4 for illumination of the subject, and slide switch 5 which turns the power source of the external strobe flash circuit ON and OFF.

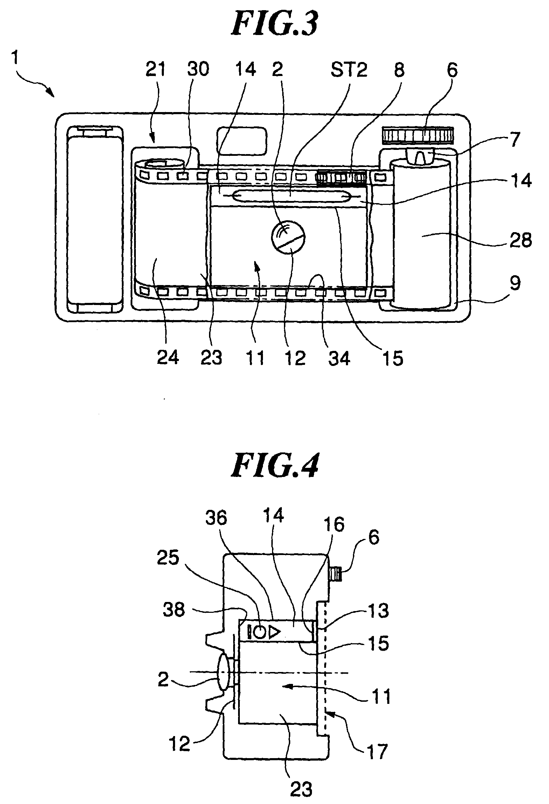

As seen in Figs. 2 and 3 showing the camera with the back lid removed, the interior 21 of the camera includes an unexposed film storage cavity 10 for holding a role of unexposed film 26. Rewinding knob 6 protrudes to the exterior of the camera when the back lid is in place and available to be rotated by the user to rotate rewinding axle 7 that winds film 26, after it has been exposed, into a cartridge 28 contained in film cartridge cavity 9. Sprocket 8 is rotated by film perforations 30 as the film is wound from chamber 10 into cartridge 28. Rotation of sprocket 8, resets a spring loaded shutter 12 (shown in a partially open position) that is slidably mounted behind the lens 2. Opening the shutter permits light to enter the camera through the lens 2 to expose the film 26. When the shutter is closed, light does not enter the camera through the lens. The interior of the camera 21 also contains a battery 32 to power the strobe flash 4 and electrical hardware(not shown) to join the flash to the battery.

As shown in Figs. 2, 3 and 4 an exposure chamber 11 occupies the space between the camera lens 2 and an exposure frame 17 (shown as phantom segment in FIG. 2) of photographic film 26. A light shield 15 divides the exposure chamber into two sections and serves as a light barrier that keeps the exposure chamber sections sealed from light transfer between each other. A first exposure chamber section, the subject exposure chamber 23, is bounded by the camera lens 2, a bottom wall 34, the light shield 15 and is open to a majority of the exposure frame 17. A second exposure chamber section, the character exposure chamber section 14, is not open to the camera lens 2 but is bounded by a front wall 38, top wall 36, the light shield 15 and is open to the remaining portion of the exposure frame 17 that is not occupied by the subject exposure chamber. The light shield can be made from any material that does not permit the passage of light and can be integrally molded or configured to be tightly snap fit into the exposure chamber 11 to create the two sections. However, to ensure that light cannot pass between the character section 14 and subject section 23 of the exposure chamber 11, the structure of the exposure camber 11 and light shield 15 is preferably integrally molded from any injection moldable plastic, eliminating the chance of gaps between the components that can permit light to pass. Additionally, the exposure chamber and light shield may be integrally molded with the entire camera body to simplify construction.

Rather than using light entering from the lens 2 when the shutter 12 opens to expose the film, character exposure chamber section 14 contains an artificial light generating source, such as a strobe flash light 25, for illuminating characters present on a character film 13 and exposing them onto the photographic film frame 17. As shown in in FIG. 2, a transparent strip (13) of film having inscribed upon it characters 40 selected by the user (e.g. CENTRAL) is positioned at the open end of the character exposure chambers 14 and adjacent the frame of photographic film. The film may be of any thin material that is transparent and can have imprinted or exposed upon it characters, shapes or designs.

As seen in Figures 3 and 4, light shield wall 15 is installed in the camera obscura located between the camera lens 2 and the exposure window 17 for photographic film of the camera body 1a, and the light shield wall 15 divides the camera obscura into camera obscura section 11 which includes the camera lens 2, and camera obscura section 14 which does not include the camera lens 2.

Camera obscura section 14 is an independent character exposure camera obscura, and it contains a strobe flash tube ST2 for character exposure in its bottom part. Section 14 has a character film holder 16 made of transparent material inserted and fixed on its open side (photographic film side). Section 14 also holds character film 13 on its top surface by insertion or partial bonding. Preferably, the surface of character film 13 (the side facing the photographic film) is set so as to coincide with the film surface 19 of the photographic film.

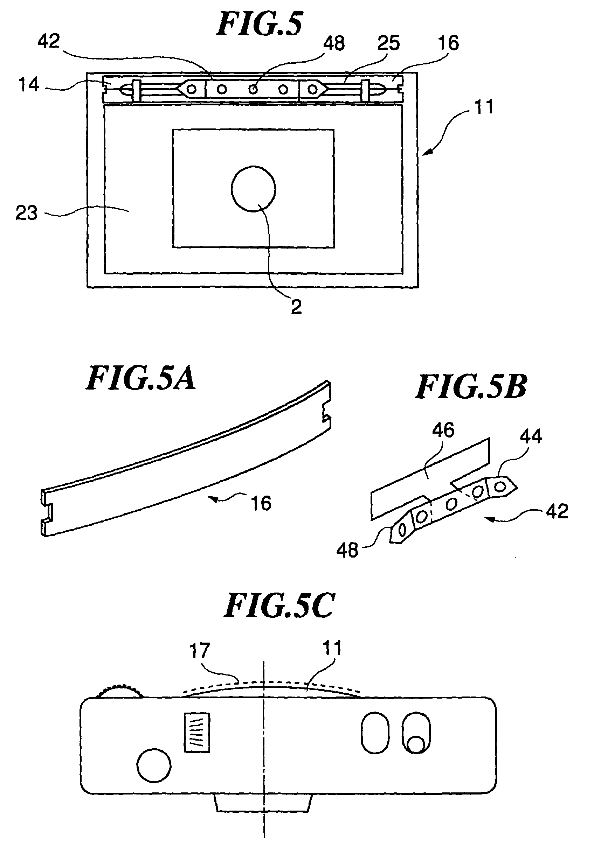

The character film is held in place by a character film holder 16 that is also made of transparent material, but that is rigid so that it can locate the character film 13. The holder, best shown in Figs. 5 and 5A, is inserted and fixed by a snap fit over the open end (photographic film side) of the character exposure section 14. Character film 13 is attached to the film holder 16 by bonding or by sliding into a slot (not shown) formed at the open end of the character exposure section 14. Preferably, the surface of character film 13 (the side facing the photographic film) contacts the film surface 19 of the photographic film to prevent gaps that could permit light generated by the character strobe 25 to stray into the area of the film frame 17 that is exposed by the subject exposure chamber section 23. Preferably the contour of the exposure chamber provides a convex profile to the film frame 17 to help provide a zero-gap surface interface with the film 26 that is extended over the chamber as is shown in Fig. 5C.

Besides an electronic strobe flash 25, the artificial light generating source may comprise an electric light bulb or LED. However, to increase cost savings, an identical strobe flash bulb to that used for the subject flash 4 is preferably used, thereby reducing the number of separate components needed to assemble the camera. As the character flash need not be of as high intensity as the subject flash, its intensity may be reduced, electrically by use of resistors (described later herein) or by shading.

A light shade 42 for reducing the intensity of the character strobe flash 25 is shown in FIGS. 5 and 4, 5B. Though various mechanisms for shading the light produced by the strobe are possible, the shade shown in the figures is fabricated from a thin metal material. The light shade shown includes a convex shaded portion 44 and a reflector portion 46 that are integrally formed as one piece. The light shade can be mounted in the character exposure chamber 14, adhered to the light shield 15, with the character flash 25 located behind it by supports 50 integrally formed with the light shield. The shade portion 44 is positioned between the character strobe and the character film and is perforated with several holes 48 that permit a reduced amount of light to pass from the character flash to the character film holder 16 and associated film 13 to be exposed onto the film frame 17. The convex shape of the shade presented to the light generating source 25 is believed to help reduce the light intensity. The reflector portion 46 of the light shade resides between the front wall 38 and character flash 25 to reflect light transmitted to the front of the camera back forward the character film 13 and photographic film frame 17. As mentioned above, other types of light shades may be used including types that are not of a completely opaque material, but that provide a transparent but shaded barrier such as a darkened strip of film.

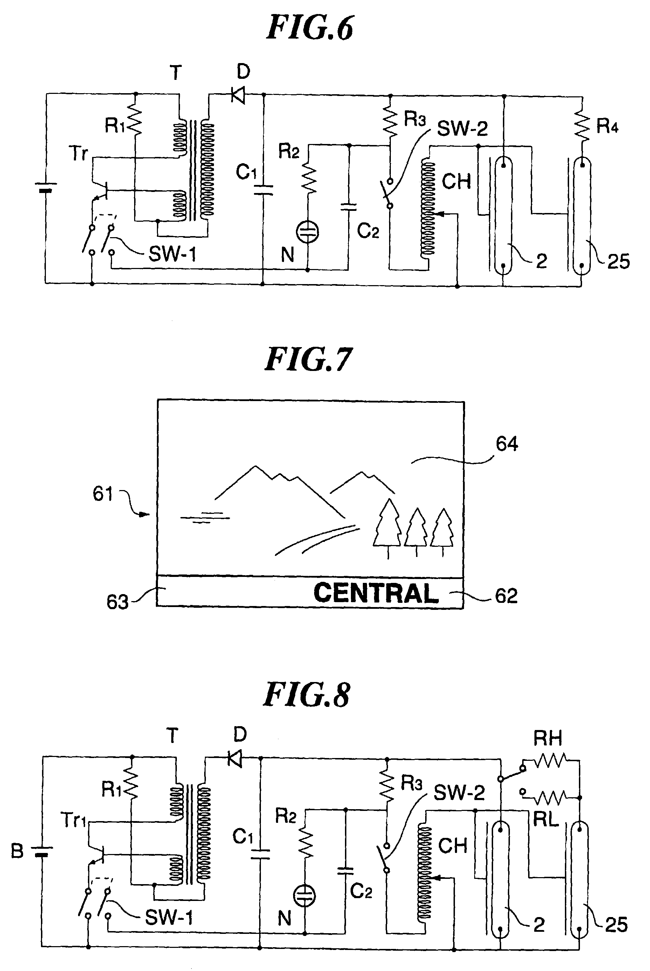

Figure 6 is a diagram of an exemplary shared electrical circuit for the subject and character flashes. The circuit includes power source battery B, power source switch SW1 linked with slide button 5, transistor Tr, resistor R, rectifier D, capacitor C, neon lamp N and choke CH for the trigger. Switch SW2 is joined to the shutter and is configured to turn ON when the shutter 12 is in the fully open position (a picture is taken) simultaneously energizing the subject strobe flash 4 which illuminates the subject, and the character strobe flash 25 which exposes the character film. Alternatively, with the additional electrical hardware, the character flash can be operated on a separate circuit from that of the subject flash so that either flash can be energized independently of the other. However, only a diagram of a shared circuit is shown for illustration, as this configuration requires the least number of components and is most cost effective, which is an object of the invention.

The operation of the present invention will now be described with reference to Figures 1-6. When the slide button 5 for subject flash power is slid to the right in Figure 1A, the linked power source SW-1 turns ON, and a high voltage, high frequency current is generated by the circuit comprising transistor Tr, resistor R1 and transformer T. The current so generated is rectified by rectifier D, while the high voltage DC current charges the capacitor C1. A neon lamp N1 then illuminates, indicating the completion of preparation of strobe flash photography.

When the user depresses a release button (not shown), the shutter 12 begins to open and the subject (or image) begins to expose the frame of photographic film 17 via camera lens 2. At the fully open position of the shutter 12, a part of the shutter pushes the switch SW2 to the ON position. The high voltage current, which had charged capacitor C1, flows through trigger choke CH. A high voltage is instantaneously generated, triggering strobe flashes 4 and 25, whereupon the electrode in strobe flashes 4 and 25 discharge, causing the strobes to flash. The emission from strobe flash 4 illuminates the subject. The emission from strobe flash 25 directly illuminates the character film 13, and exposes the photographic film frame 17 in contact with it.

As mentioned above, only a small amount of light is needed from the strobe flash 25 since it directly illuminates the character film 13 and exposes the photographic film associated with it. Therefore, to reduce the intensity of the flash, the current flowing to the strobe 25 can be reduced and the light intensity thus limited to a suitably low level by inserting resistor R4 serially. Additionally, by including resistor R4, the drop in light intensity of external strobe flash 4 due to the power drain caused by flash 25 connected to it in parallel, is minimized. As discussed above, a light shade alternatively, or additionally may be placed between the flash 25 and film frame 17 to reduce the light intensity.

Fig. 7 is an example of a photographic print 61 made from the camera of the present invention. The subject area 64 appears in the upper portion of the print 61. Character area 62 appears in the lower part of the print 61. In addition to the legend created in the character area 62, a record regarding the subject of the print also can be entered, written with a ballpoint pen for example, in the margin 63 of the character area 62. Alternatively, the entire character area 62 of the frame 61 can be made available for a written record on the finished print by omitting characters from the character film 13 during exposure of the film frames.

In a camera which does not possess an automatic exposure mechanism, such as an inexpensive disposable camera, the frame 61 can be brightened, if needed, by making an adjustment for the exposure level during the printing stage of the print process. For example, when the subject is dark, such as occurs in night scenery or indoor photography, the subject can be brightened. The frame 61 can also be dimmed by making an adjustment at the printing stage of the print process when the screen is too bright, such as occurs during photography under bright sunlight. However, since the measurement of brightness for this adjustment of exposure is normally carried out in the center of the frame in the subject area 64, the character area 62, which always has a constant exposure due to its independent and artificial light generating source, can be adversely affected because printing technology requires that the entire frame be adjusted as together. One exposure frame cannot be adjusted for two brightness levels. Thus the character area can be made too light, if the exposure had been increased to compensate for a dark subject, while character area 62 can be made too dark if the exposure had been decreased to compensate for a bright subject.

Fig. 8 relates to a second embodiment of the present invention that provides a countermeasure to the above described problem. The character flash emission circuitry shown in Fig. 8 is arranged so that it can be switched between multiple serial resistors by using a switch SW3 to vary the intensity of the character flash to coincide with the light conditions of the subject. An exterior slide knob (not shown) can be employed on the exterior of the camera body 22 to manipulate the switch SW-3. Resistor RH with high resistance and resistor RL with low resistance regulates differently the power delivered to the flash 25, causing the flash to operate at different intensity levels. The arrangement of all other components shown in Fig. 8, is the same as was described in connection with Fig. 6. The exposure adjustment at the printing stage is thus kept from affecting the character area 62 of the frame 61 by switching the resistor to the RH side when the subject is dark, such as occurs in night scenery or indoor photography so that the character area can be brightened the appropriate amount along with the subject area of the frame during the print process. By switching to the RL side when the subject is bright, such as occurs in photography under daytime sunlight when the character area will be exposed too brightly, the character area 62 of the print will be compensated to be darker along with the subject area 64 of the print during printing.

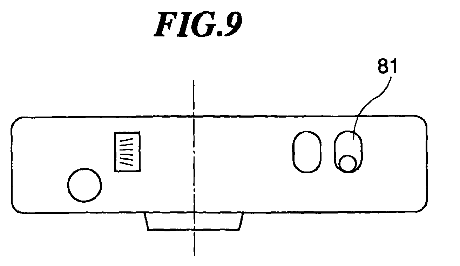

As seen in Figure 9, a slide knob 81 manipulates switch SW-3. The exposure adjustment at the printing stage is kept from affecting the character by switching the slide knob 81 to the RH side when the subject is dark, such as occurs in night scenery or indoor photography, and by switching the slide knob 81 to the RL side when the subject is bright, such as occurs in photography under daytime sunlight.

Exposing the character film directly with a strobe flash light as opposed to introducing light by an optical conductor, such as optical fiber, offers several advantages. Cost is reduced since little additional electrical hardware is necessary to power the character flash 25, some of which can be shared with the subject strobe flash emission circuitry. In addition, since the flash emitted from a thin strobe flash bulb itself is a thin and long light, the desired character area shape of a long rectangular shape in the exposure frame 17 can be illuminated uniformly along its length both easily and inexpensively in comparison to adding a light diffusor as is required by the optical fiber to produce a character image of long rectangular shape. Moreover, when the direct flash of a strobe flash light is used as a character light source, there is no need for color temperature correction of the character area 62 of the print 61, since the color temperature of the print exposed with the strobe flash light and the color temperature of the subject area of the print that was exposed only to light entering through the lens is approximately the same.

By employing the strobe flash tube directly as the character light source installed in the second camera obscura section, the cost of manufacture can be lowered considerably compared to the cost for conventional methods of drawing around an optical conductor, such as optical fiber, since only electrical wiring would be necessary, and it can share much of the strobe flash emission circuitry for illuminating the subject.

In addition, since the flash emitted from the thin strobe flash tube itself can be thin and long light, the character image of long rectangular shape can be illuminated uniformly along its length both easily and inexpensively for a character image of long rectangular shape. Moreover, if the flash of a direct strobe flash tube is used as a character light source, there is no nuisance associated with color temperature correction of the character film, since the color temperature of the strobe flash light and noon-light color film is approximately the same. For example, there is far less difficulty compared with the case where an incandescent bulb is employed as the character light source.

Finally, even in the case when the exposure unevenness of the photographic film due to difference in brightness of the subject is adjusted during the exposure stage of the print process, it is now possible to set the exposure of the printed character to match the brightness of the subject by switching the serial resistors of the character strobe flash tube.

## Claims

1. A camera comprising:
a lens,
an exposure chamber adjoining the lens and open to a frame of photographic film and divided into at least two light sealed sections and
an artificial light generating source disposed in at least one of the sections of the exposure chamber and arranged to expose the film.

2. The camera of claim 1 wherein the exposure chamber sections are divided by a light shield.

3. The camera of claim 2 wherein the exposure chamber and light shield are integrally molded with the camera.

4. The camera of claim 2 wherein the light shield is arranged in the exposure chamber so that light does not pass between the exposure chamber sections.

5. The camera of claim 1 wherein the artificial light generating source is an electric light bulb.

6. The camera of claim 1 wherein the artificial light generating source is an electronic strobe flash.

7. The camera of claim 1 further comprising an external artificial light generating source for illuminating a subject to be photographed.

8. The camera of claim 7 wherein the external light generating source and the exposure chamber light generating source share the same power source.

9. The camera of claim 8 wherein the external and internal light generating sources are energized by the operation of the same camera function.

10. The camera of claim 1 wherein the intensity of light produced by the internal light generating source is variably controllable by the user.

11. A camera comprising:
a camera body having an exterior and
an interior containing photographic film to be exposed and an artificial light generating source arranged to expose the film.

12. The camera of claim 11 wherein the artificial light generating source is an electronic strobe flash.

13. The camera of claim 11 wherein the artificial light generating source is an electric light bulb.

14. A method of exposing photographic film comprising:
providing a camera for holding the film having a lens, a shutter adjacent the lens and an exposure chamber disposed between the film and the lens that is separated into at least two light-tight sections with at least one of the sections being isolated from the lens and containing an artificial light generating source;
disposing a character film having an arrangement of characters thereon between the photographic film and the section of the exposure chamber having the light generating source;
opening the shutter to expose a section of the photographic film with light entering through the lens while simultaneously energizing the light source to expose a different section of the photographic film with the characters displayed on the character film.

15. A camera equipped with a character display device, comprising:
a camera body having a camera lens and configured to hold photographic film;
an exposure chamber disposed between the camera lens and the photographic film; and
a light shield disposed in the exposure chamber for dividing the exposure chamber into a first exposure chamber section containing the camera lens and second exposure chamber section that is isolated from the lens;
an exposure frame of film divided by the light shield into a first exposure frame section and a second exposure frame section having fixed before it a transparent film maintained in proximity to the photographic film surface;
the camera further comprising a character illumination light generating source disposed within the second exposure chamber section for exposing the character onto the photographic film;
wherein, during photographing of a subject, the first exposure frame section is exposed with the subject and the second exposure frame section is exposed with any characters displayed on the transparent film.

16. A camera as described in claim 15:
a substantially transparent plastic plate detachably mounted to the second exposure chamber section and arranged to hold the transparent character film between the photographic film the character illuminating light generating source.

17. A camera as described in claim 15, further comprising an external light generating source for illuminating the subject.

18. A camera as described in claim 17, further comprising first light circuit connected to the character illumination light generating source, and second light circuit connected to the external light generating source, wherein a portion of the first light emission circuit is common with the second light emission circuit.

19. A camera as described in claim 17, wherein the character light generating source and the external light generating source are separate strobe flash bulbs connected in parallel.

20. A camera as described in claim 19, wherein the strobe flash for the character light generating source has at least one resistor connected to it serially.

21. A camera as described in claim 20, wherein the at least one resistor comprises multiple resistors which are switchable.

22. A camera having at least two light sources for concurrently exposing at least two separate regions of a single frame of a photographic film, wherein:
a first light source comprises a lens that permits light to enter the camera and expose one region of the frame of the photographic film to an image of a subject; and
a second light source comprises an artificial light generating source disposed within the camera for exposing the remaining portion of the frame of photographic film to light simultaneously with the exposure by light from the lens.

23. A camera as described in claim 22, wherein the concurrent exposure is triggered by releasing a shutter arranged adjacent to the lens, causing the artificial light generating source to be energized and causing the shutter to open to allow light to enter the camera through the lens, thereby causing each region of the frame of photographic film to be concurrently exposed to at least two different sources of light.

24. A camera as described in claim 22, wherein the second light source comprises a strobe lamp.

25. A camera as described in claim 24 wherein the strobe lamp is electrically connected to a battery by a wiring.

26. A camera as described in claim 24 wherein the strobe lamp is connected to the battery in parallel with an external strobe lamp for flashing a subject.

27. An improved camera unit according to claim 25, wherein at least one selectively engageable resistor is included in the wiring to the artificial light generating source.

28. A camera as described in claim 22, wherein the artificial light generating source is a strobe flash lamp.

29. A camera as defined in claim 28 wherein the strobe flash exposes the film with light transmitted through a substantially transparent plastic plate being detachably mounted to camera adjacent to the photographic film and a substantially transparent film or plastic sheet bearing at least one character, message or image being held in place by the substantially transparent plastic plate.

30. A camera as described in claim 28, wherein the strobe flash is surrounded by a light attenuation device comprising a light-reflecting wall having at least one hole through which a light passes.

31. A camera as defined in claim 30, wherein the surface of the light-reflecting wall facing the strobe flash is convex.

32. A camera as defined in claim 30, wherein the hole(s) is circular.

33. A camera equipped with a character display device, comprising:
a camera body including a camera lens and holding photographic film;
a camera obscura disposed between the camera lens and the photographic film; and
light shield means disposed in the camera obscura for dividing the camera obscura into first and second camera obscura sections;
wherein the first camera obscura section contains the camera lens, and the second camera obscura section does not contain the camera lens;
said camera having an exposure window which is divided by said light shield means into first and second exposure window sections;
wherein, during photographing of a subject, the first exposure window section exposes the subject and the second exposure window section fixes a transparent film in proximity to the film surface, thereby creating an exposure of a character onto the photographic film;
said camera further comprising character illumination light source means for exposing the character onto the photographic film, said character illumination light source means comprising a strobe flash light source disposed within said second camera obscura section.

34. A camera equipped with a character display device according to claim 33, further comprising photography light source means for illuminating the subject.

35. A camera equipped with a character display device according to claim 34, further comprising first light emission circuitry connected to said character illumination light source means, and second light emission circuitry connected to said photography light source means, wherein a portion of the first light emission circuitry is common with the second light emission circuitry.

36. A camera equipped with a character display device according to claim 34, wherein said strobe flash light source includes a strobe flash tube, and wherein said photography light source means comprises an additional strobe flash light source having an additional strobe flash tube, said strobe flash tube being connected in parallel with said additional strobe flash tube.

37. A camera equipped with a character display device according to claim 36, wherein the strobe flash tube has at least one resistor connected serially to it.

38. A camera equipped with a character display device according to claim 37, wherein said at least one resistor comprises multiple resistors which are switchable.
